# FASCICULE DE BREVET EUROPEEN

(11) **EP 3 898 341 B1**
(45) Date de publication et mention de la délivrance du brevet: **04.06.2025**
(21) Numéro de dépôt: 19813369.6
(22) Date de dépôt: 09.12.2019
(51) Int. Cl.: B60R 16/023, B64C 13/00

(54) **ARCHITECTURE ELECTRONIQUE POUR SYSTEME EMBARQUE**
ELEKTRONISCHE ARCHITEKTUR FÜR EIN BORDSYSTEM
ELECTRONIC ARCHITECTURE FOR ONBOARD SYSTEM

(30) Priorité: 20.12.2018 FR 1873551
(43) Date de publication de la demande: 27.10.2021
(73) Titulaire: Commissariat à l'Energie Atomique et aux Energies Alternatives, 75015 Paris (FR); Renault s.a.s, 92100 Boulogne Billancourt (FR)
(72) Inventeur: PHILIPPE, Jean-Marc, 91190 GIF-SUR-YVETTE (FR); CARBON, Alexandre, 91300 MASSY (FR); DAVID, Raphaël, 91440 BURES-SUR-YVETTE (FR); VENTROUX, Nicolas, 91190 GIF-SUR-YVETTE (FR); FAURE, Robert, 92350 LE PLESSIS-ROBINSON (FR); FORGEOT, Laurent, 56610 ARRADON (FR); LE GARFF, Laurent, 78220 VIROFLAY (FR); STINEAU, Jean-Yves, 78180 MONTIGNY LE BRETONNEUX (FR)
(74) Mandataire: Atout PI Laplace
(86) Numéro de dépôt international: PCT/EP2019/084264
(87) Numéro de publication internationale: WO 2020/126624

(56) Documents cités:
- US-A1- 2007 113 070
- US-A1- 2012 109 424
- SOMMER STEPHAN ET AL: "RACE: A Centralized Platform Computer Based Architecture for Automotive Applications", 2013 IEEE INTERNATIONAL ELECTRIC VEHICLE CONFERENCE (IEVC), IEEE, 23 October 2013 (2013-10-23), pages 1 - 6, XP032529991, DOI: 10.1109/IEVC.2013.6681152
- STAHLE HAUKE ET AL: "Towards the deployment of a centralized ICT architecture in the automotive domain", 2013 2ND MEDITERRANEAN CONFERENCE ON EMBEDDED COMPUTING (MECO), IEEE, 15 June 2013 (2013-06-15), pages 66 - 69, XP032485071, ISSN: 1800-993X, [retrieved on 20130916], DOI: 10.1109/MECO.2013.6601320

## Description

La présente invention concerne une architecture électronique pour système embarqué. Elle s'applique notamment pour un système assurant la gestion des fonctions d'un véhicule automobile. Elle s'applique en particulier pour tous types de véhicules automobiles et s'applique plus généralement pour tout système cyber-physique réparti.

L'objectif principal de l'architecture électronique d'un véhicule automobile est de permettre la réalisation correcte des prestations du véhicule, c'est-à-dire de ses fonctions (vues par l'utilisateur ou non). De manière simplifiée, chaque fonction nécessite des données d'entrées fournies par un ou plusieurs capteurs ou calculateurs, un moyen de traitement de ces données, et génère des données de sorties, commandant un ou plusieurs actionneurs ou servant à un ou plusieurs calculateurs. Il est à noter que les actionneurs peuvent aussi envoyer des données et que les capteurs peuvent recevoir des données. Le nombre de fonctions est en forte augmentation depuis les débuts de l'automobile, pour la sécurité, le confort ou par exemple la fiabilité. De plus, ces fonctions peuvent être de natures très différentes, que ce soit en termes de calculs nécessaires ou de données manipulées. Par exemple, une fonction pourra simplement consister à faire réagir un moteur quand un capteur sera pressé par le conducteur, mais on trouve aussi des systèmes complexes d'aide à la conduite pouvant compter sur plusieurs flux de caméra à haut débit de manière à détecter les obstacles devant le véhicule.

Un point très important est aussi lié au fait qu'elles n'ont pas la même sensibilité à la sûreté et à la sécurité. Ainsi, si certaines fonctions ne sont pas critiques à la bonne marche du véhicule, la mise en défaut d'autres fonctions peut mettre en danger la vie des occupants (déclenchement d'un airbag sur autoroute, par exemple). Ainsi, la maîtrise du temps d'obtention des données, des calculs et de la distribution des commandes aux actionneurs est un point très important, de même que la sécurisation de ces informations. Plusieurs points liés à l'intégration dans le véhicule sont aussi à considérer. Premièrement, l'encombrement et le poids des systèmes sont des problèmes importants. Ils doivent être les plus réduits possibles afin de conserver des véhicules de taille raisonnable, et dont la consommation énergétique est maîtrisée. Un autre point lié à l'encombrement du système concerne l'interconnexion des capteurs, actionneurs et ressources de calcul : le câblage doit être le plus faible possible pour les mêmes raisons. Deuxièmement, le coût économique de l'architecture est à considérer. Elle doit être dimensionnée au plus juste de manière à ne pas augmenter trop fortement le prix du véhicule. Cependant, cette optimisation du coût de fabrication ne doit pas empêcher l'architecture de pouvoir répondre aux besoins en performance des futures fonctions qui devront être intégrées au véhicule, et d'intégration de futurs capteurs et actionneurs (caméras haute résolution, etc.). En effet, redévelopper une architecture de zéro est aussi très couteux.

Un autre point très coûteux du développement d'une architecture concerne la découverte tardive de prestations à intégrer dans un véhicule.

En résumé, un problème technique à résoudre est d'être capable d'offrir une architecture électronique apte à évoluer et permettant d'assurer l'exécution des fonctions actuelles et futures d'un véhicule et donc de fournir la puissance de calcul et les moyens d'interconnexion suffisants, ainsi que des propriétés de sécurité, de sûreté et de maîtrise du temps. Ces bonnes propriétés doivent être fournies avec une complexité et un encombrement maîtrisables.

Les solutions existantes sont le reflet des différentes périodes de l'évolution automobile. La présentation des arts antérieurs s'attache ci-après à présenter les architectures complètes suivant les grands types de fonctionnement.

Dans les premières années de l'automobile, le nombre de prestations était fortement réduit et l'exécution de celles-ci était plutôt mécanique et manuelle (comme par exemple le démarrage du moteur). Au début des années 1900, l'introduction de l'allumage électronique du moteur est le premier pas d'une longue marche qui conduira à rajouter des systèmes électroniques dans le véhicule afin d'introduire des prestations de plus en plus complexes, visant à améliorer le confort et la sécurité des passagers.

La standardisation de ces systèmes a débouché sur l'appellation ECU (« Electronic Control Units ») introduite depuis la fin des années 70. Chaque ECU est composé d'une ressource de calcul (processeur ou microcontrôleur), taillée en général au plus juste pour des raisons de coût, avec ses mémoires, ses entrées/sorties, etc. Ainsi, depuis l'avènement des systèmes électroniques en masse dans les véhicules, l'exécution des prestations d'un véhicule automobile dépend très fortement de l'utilisation de systèmes embarqués autonomes reliés entre eux et à des capteurs/actionneurs via des câbles/réseaux d'interconnexion. La présente invention se situe dans le cadre des architectures de véhicule utilisant des ECU, ce qui représente la totalité des véhicules actuels.

De manière pragmatique, depuis les années 1970, l'innovation dans ce domaine a été réalisée par l'introduction de nouvelles architectures, grâce aux progrès technologiques permettant de garantir les bonnes propriétés de fonctionnement du véhicule. Dans ce qui suit, nous présentons une vision des différentes périodes des architectures automobiles afin de situer l'invention dans ce contexte.

Les premières architectures électroniques étaient complètement distribuées. Elles consistaient à introduire des sous-systèmes dédiés pour chaque fonction du véhicule, incluant leurs capteurs, actionneurs, calculateurs et câbles d'interconnexion.

Le nombre de fonctions augmentant, et celles-ci devenant de plus en plus dépendantes les unes des autres (partage de données notamment), il fallut mettre en œuvre une architecture électronique adaptée afin de garder la maîtrise de la complexité. Cependant, les réseaux engendrés par ces architectures (reposant sur des liens dédiés entre les ressources) sont devenus très complexes, avec un surcroît de câblage qui n'était plus tolérable dans les véhicules (complexité d'intégration, poids trop important notamment).

Dans les années 1980/1990, l'arrivée de protocoles et de bus permettant le multiplexage des signaux a été un point important pour retrouver un niveau de complexité acceptable. Ces technologies permettaient à un même moyen de communication d'être utilisé par plusieurs ECU pour transmettre plusieurs données différentes et ainsi, permettait de diminuer fortement le nombre de câbles (et le poids notamment). Un capteur n'avait plus à être directement relié à tous les systèmes électroniques l'utilisant. Il était uniquement relié à un système électronique et cette donnée était communiquée sur le bus multiplexé à d'autres systèmes électroniques. L'aptitude à être programmés des ECU ainsi que l'utilisation de bus multiplexés permet sans surcoût d'activer des fonctions supplémentaires, si le dimensionnement a été réalisé de manière adéquate. Cependant, l'ajout de nouvelles fonctions nécessite généralement l'ajout d'un ECU supplémentaire sur le réseau.

Les technologies de multiplexage permettent encore de réaliser les systèmes automobiles actuels grâce aux évolutions technologiques. Au fil du temps, une spécialisation des réseaux a émergé, notamment liée au besoin de mutualisation ou encore à cause de contraintes spécifiques comme des besoins de débit, de maîtrise du temps ou encore de fiabilité. Ainsi, dans une voiture moderne, il n'est pas rare de voir cohabiter plusieurs bus de standards différents.

L'évolution des débits des données multimédia a nécessité de passer à des débits plus élevés. L'utilisation de technologies d'interconnexions standards éprouvées dans l'univers informatique comme l'Ethernet s'est alors petit à petit imposé depuis quelques années. La transmission de données multimédia de nature diverse entre ECU distribués a nécessité de définir des technologies de synchronisation, notamment entre les images et les sons, pour la diffusion de données en flux (*Streaming*)*.*

Dans le même temps des liens dédiés, notamment pour la transmission d'images vidéo non compressées ont vu le jour. Des liens sont également disponibles pour transmettre par des canaux différents de la vidéo, de l'audio, du trafic Ethernet et des protocoles de communication.

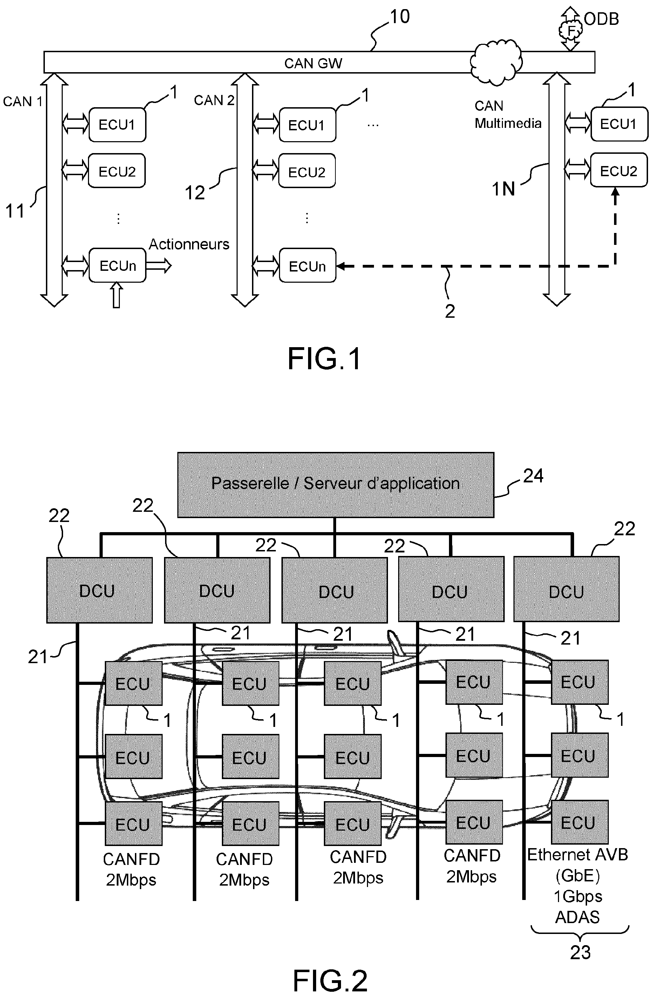

La figure 1 représente une vision haut niveau d'une architecture électronique actuelle pour la gestion d'un véhicule automobile. Divers ECU 1 sont regroupés sur un bus multiplexé CAN (« Controller Area Network ») 11, 12, 1N, un ECU dédié 10 (*CAN Gateway*) permettant d'aller d'un bus CAN à un autre en respectant les contraintes de temps. Cette architecture régulière est cependant mise à mal par l'ajout de fonctions nécessitant par exemple des débits de données plus élevés que ne le permet le CAN. Ainsi, par exemple, en trait discontinu 2, on peut voir un lien direct reliant deux ECU entre eux.

Ainsi, la complexité maîtrisée par le multiplexage devient à nouveau un problème. On compte maintenant plus de 70 ECU dans un véhicule haut de gamme, interconnectés par un réseau de plus en plus complexe, composés de sous-réseaux hétérogènes amenant à un enchevêtrement de câbles. Ceci entraîne un coût, du poids supplémentaire et une maintenance complexe.

Comme l'avènement du multiplexage avait permis de réduire la complexité des architectures, l'adoption de nouvelles technologies au sein du domaine automobile a permis l'émergence d'une nouvelle catégorie d'architecture, vue comme la future génération : les architectures basées sur l'existence de domaines. Un exemple d'architecture par domaines fonctionnels est illustré par la figure 2. L'idée générale est de réutiliser la vision de la figure 1, mais de regrouper fortement les ECU 1 appartenant un à même domaine fonctionnel autour d'un bus multiplexé 21 dédié, adapté aux contraintes du domaine, les ECU et les bus étant pilotés pour chaque domaine par une unité de contrôle de domaine 22 (« Domain Controller Unit », DCU). L'introduction d'un niveau de hiérarchie par domaine, le contrôleur de domaine, ainsi qu'un serveur d'application/gateway 24 pour relier les domaines aux aspects multimédia, connectivité est la voie actuellement explorée par les constructeurs et équipementiers.

A l'heure actuelle les architectures basées sur les domaines fonctionnels n'ont pas encore été fortement stressées. La vision domaine est intéressante car les fonctions (et donc les ECU) d'un même domaine fonctionnel peuvent être vues comme ayant des propriétés proches, au moins en termes d'échanges de données, et l'on peut ainsi optimiser le réseau interconnectant les ECU du domaine. Un des points forts de ce concept est la séparation du domaine ADAS (*Advanced driver-assistance system* - Aide à la conduite automobile) par rapport au reste, car c'est le domaine le plus exigeant à l'heure actuelle, avec les aspects multimédia.

Par exemple, sur la figure 2, on voit que les ECU du domaine multimédia 23 sont sur un réseau Ethernet rapide à 1 Gbits/s, mais que les autres domaines ne nécessitent qu'un réseau CAN FD à 2 Mbits/s.

Cependant, dans la pratique, on peut déjà observer des points négatifs. Par exemple, cette répartition ne tient pas compte de la localisation des ECU, des capteurs et des actionneurs dans le véhicule. Ainsi, rien ne dit que les capteurs et actionneurs d'un domaine fonctionnel sont géographiquement proches de l'ECU du domaine, ce qui implique du câblage. De même le contrôleur de domaine ajoute un ECU supplémentaire. Dans le cadre d'une architecture optimisée, rien ne dit que l'architecture physique sera suffisamment flexible pour être adaptée aux évolutions des prestations. Un autre point problématique est lié au fait que, dans la pratique, les fonctions exécutées sur les ECU d'un domaine fonctionnel sont en fait très hétérogènes, en termes notamment de niveau de sécurité, de niveau de sensibilité ou de types de traitement ou de données. Dans ces conditions, à part optimiser l'interconnexion entre les ECU en diminuant le « pire cas » possible, il est très compliqué à la fois d'optimiser fortement les calculateurs et d'en diminuer le nombre par mutualisation.

Dans certaines architectures déjà proposées, un point faible réside notamment dans le fait qu'il y a une assignation fixe de fonctions logiques et logicielles à un ECU matériel et une optimisation de cet ECU pour sa fonction. Ainsi, toute modification de l'architecture ne sera pas aisée. Par exemple, l'ajout d'un domaine ou l'ajout d'une nouvelle fonction dans un domaine nécessitant les sorties d'un capteur ou le contrôle d'un actionneur ne faisant pas partie du domaine nécessitera des communications complexes à mettre en place.

Une architecture plus avancée, appelée RACE (« Robust and reliable Automotive Computing Environment for future eCars ») est notamment présentée dans le document de S. Sommer et al « RACE : A Centralized Platform Computer Based Architecture for Automotive Applications », IEEE International Electric Vehicle Conference (IEVC), Santa Clara, CA, 2013. L'architecture RACE se base sur un calculateur centralisé appelé CPC (« Centralized Platform Computer ») composé d'un ou plusieurs VCCs (« Vehicle Control Computers ») reliés entre eux par un réseau Ethernet, suivant une topologie permettant d'assurer des propriétés de sûreté de fonctionnement telle que décrite notamment dans le document EP 2 670 087 divulguant une topologie en anneau. Un des principes de RACE est que les capteurs et actionneurs du véhicule doivent être intelligents : ils exploitent et gèrent eux-mêmes les données liées aux processus locaux. Ainsi, le CPC est relié à des capteurs/actionneurs intelligents capable de se gérer eux-mêmes par un réseau Ethernet. L'architecture RACE ressemble à l'architecture basée sur des domaines fonctionnels sauf que les domaines deviennent plus localisés dans le véhicule et non regroupés par fonctions de haut niveau. L'architecture RACE reste fortement hiérarchisée au niveau contrôle et suppose la présence de ces nouveaux capteurs/actionneurs intelligents qui gèrent leur domaine, incluant les boucles de contrôle des capteurs/actionneurs. Un des avantages de l'architecture RACE est qu'il y a un découplage assez important entre le logiciel et le matériel dans le sens où l'affectation de matériel à un domaine particulier est faible. Cependant il reste un couplage fort les boucles de contrôle locales fonctionnant sur les capteurs/actionneurs intelligents et leur localisation dans le véhicule. Ainsi l'architecture n'est pas complètement centralisée, une part importante du contrôle étant locale. En conséquence, une modification dans l'architecture (au niveau des capteurs/actionneurs, logiciels, etc.) nécessite de modifier plusieurs boucles de contrôle avec des passages de messages/données complexes à gérer, par exemple au niveau du CPC. De même, rajouter de l'intelligence au niveau des capteurs/actionneurs implique de rajouter des ressources de calcul localement, augmentant fortement le coût de l'architecture électronique du véhicule.

Il est connu le document US 2007/0113070 A1 divulgue une architecture électronique embarquée dans un système assurant la gestion des fonctions dudit système. Ce document ne divulgue pas la distribution des commandes vers des actionneurs de plusieurs domaines fonctionnels.

Il est également connu le document "Race: A Centralized Platform Computer Based >Architecture for Automotive Applications", 2013 IEEE INTERNATIONAL ELECTRIC VEHICLE CONFERENCE (IEVC), IEEE, 23 octobre 2013, pages 1-6, XP032529991.

Un but de l'invention est de pallier les inconvénients précités. A cet effet, l'invention a pour objet une architecture électronique embarquée dans un système assurant la gestion des fonctions dudit système, lesdites fonctions étant mises en œuvre via un ensemble de capteurs et d'actionneurs, ladite architecture comportant au moins :
- un calculateur central ;
- un réseau de communication temps réel ;
- un ensemble de modules d'interface affectés chacun à une zone géographique dudit système, chaque module :
   ∘ agrégeant des signaux issus d'au moins un desdits capteurs de la zone qui lui est affecté et envoyant lesdits signaux audit calculateur central via ledit réseau de communication ;
   ∘ et/ou distribuant des signaux de commande vers au moins un desdits actionneurs de la zone qui lui est affectée ;
ledit calculateur central pilotant lesdits actionneurs en fonction des signaux issus desdits capteurs, les signaux de commande desdits actionneurs étant envoyés auxdits modules d'interface via ledit réseau de communications.

Au moins un desdits modules d'interface agrège les signaux issus de capteurs de plusieurs domaines fonctionnels et distribue des commandes vers de actionneurs de plusieurs domaines fonctionnels, lesdits capteurs et actionneurs étant situés dans la zone géographique affectée audit au moins module.

Par exemple, au moins un desdits modules d'interface agrège également des signaux issus d'au moins un desdits actionneurs et/ou distribue des signaux vers au moins un desdits capteurs.

Dans un mode de réalisation particulier, ledit calculateur central est composé d'une carte mère et de sous-systèmes de calcul, chaque sous-système comprenant un ou plusieurs processeurs couplés à une mémoire privée aptes à exécuter plusieurs partitions logicielles, lesdits sous-systèmes communiquant entre elles et avec ledit réseau de communication au moyen d'une infrastructure d'interconnexion implantée sur ladite carte mère.

Ladite architecture comporte par exemple un bloc fonctionnel centralisé de gestion des données permettant d'accéder aux données des mémoires présentes dans le calculateur et dans lesdits modules, ledit bloc fonctionnel assurant aux différents composants de ladite architecture un accès unifié aux données liées aux capteurs et actionneurs répartis dans ledit système ainsi qu'aux données générées par lesdits sous-systèmes de calcul.

Ledit bloc fonctionnel est par exemple réalisé au moyen d'un service de mémoire distribuée virtuellement partagée entre ledit calculateur et lesdits modules, de sorte que toutes les communications dudit calculateur central avec lesdits capteurs et actionneurs transitent par ladite mémoire virtuelle et de sorte que les mémoires distribuées dans ladite architecture et l'ensemble des capteurs et actionneurs se présentent audit calculateur central comme une seule mémoire partagée.

Ledit bloc fonctionnel peut permettre de sécuriser l'accès aux données via l'utilisation d'attributs associés aux données.

Ladite architecture comporte par exemple un bloc fonctionnel permettant d'assurer la synchronisation entre lesdits sous-systèmes de calcul.

Ladite architecture comporte par exemple un bloc fonctionnel permettant d'assurer et de supporter les services liés à la sûreté de fonctionnement dudit système.

Dans un mode de réalisation particulier, ledit module d'interface comporte au moins :
- un processeur de communication ;
- des interfaces de communication entre ledit processeur et des actionneurs et/ou capteurs ;
- une interface de communication entre ledit processeur et ledit réseau de communication ;
ledit processeur de communication ayant pour fonction d'ordonner les données issues desdits capteurs en paquets pour les transmettre audit calculateur central via ledit réseau de communication et de distribuer les données de commande issues dudit calculateur central, via ledit réseau de communications, auxdits actionneurs.

Lesdites interfaces de communications entre ledit processeur et lesdits actionneurs et/ou capteurs étant de différents types, ledit processeur effectue par exemple des traductions de protocoles de communication desdits interfaces pour échanger lesdites données avec ledit calculateur central selon un protocole unique.

Ladite architecture comporte par exemple au moins une passerelle apte à connecter ledit réseau de communication à au moins un autre réseau de communication.

Elle comporte par exemple un calculateur secondaire communiquant avec ledit réseau de communication au moyen de ladite passerelle (35), ledit calculateur secondaire pilotant des fonctions connectées audit autre réseau.

Elle comporte par exemple une combinaison de techniques en complément de l'exécution de plusieurs partitions logicielles, ladite combinaison formant des domaines virtuels, chaque domaine virtuel couvrant au moins une desdites partition traitant les modules d'interface (33) d'un groupe de capteurs et d'actionneurs. Ladite combinaison comporte par exemple une combinaison de mécanismes de ségrégation de transfert de données dans ledit réseau de communications temps réel. Ladite combinaison est par exemple basée sur des attributs de données placés par lesdits modules d'interface.

Les communications entre ledit calculateur central et lesdits modules d'interface sont par exemple commandées par ledit calculateur.

Ladite architecture comporte par exemple un sous-système pour la gestion des signaux d'entrée et de sortie à haute vitesse de transmission, connecté à l'infrastructure d'interconnexion de ladite carte mère, ledit sous-système étant composé d'une ou plusieurs cartes filles et assurant la fonction d'un module d'interface entre des capteurs et/ou actionneurs à haut vitesse de transmission et ledit calculateur central.

Ledit réseau de communication est du type Ethernet déterministe, il est par exemple du type Ethernet TSN.

D'autres caractéristiques et avantages de l'invention apparaîtront à l'aide de la description qui suit, faite en regard de dessins annexés qui représentent :
- La figure 1, déjà décrite, une présentation haut niveau d'une architecture électronique possible pour un véhicule automobile actuel ;
- La figure 2, déjà décrite, un exemple d'architecture par domaine ;
- Les figures 3a et 3b, respectivement une architecture selon l'art antérieur et une architecture selon l'invention ;
- La figure 4, une représentation plus détaillée d'une architecture selon l'invention adressant différentes fonctions possibles d'un véhicule automobiles ;
- La figure 5, un exemple de réalisation d'un calculateur central utilisé dans une architecture selon l'invention ;
- La figure 6, une représentation d'une architecture selon l'invention avec un module d'interface agrégeant chacun des capteurs/actionneurs hétérogènes afin de les connecter au calculateur central ;
- La figure 7, un exemple de réalisation d'un module d'interface utilisé dans une architecture selon l'invention agrégeant les signaux échangés avec les capteurs et actionneurs répartis dans un véhicule ;
- La figure 8, une illustration de domaines virtuels implantés grâce à l'utilisation de liens virtuels dans une architecture selon l'invention ;
- La figure 9, une illustration des domaines virtuels dans une architecture selon l'invention avec les différents contributeurs ;
- La figure 10, la représentation de la figure 9 incluant un sous-système de gestion des entrées et sorties haute vitesse.

La description de l'invention qui suit est faite à titre d'exemple pour un système embarqué dans un véhicule. Elle s'applique néanmoins à d'autres systèmes embarqués mobiles ou non.

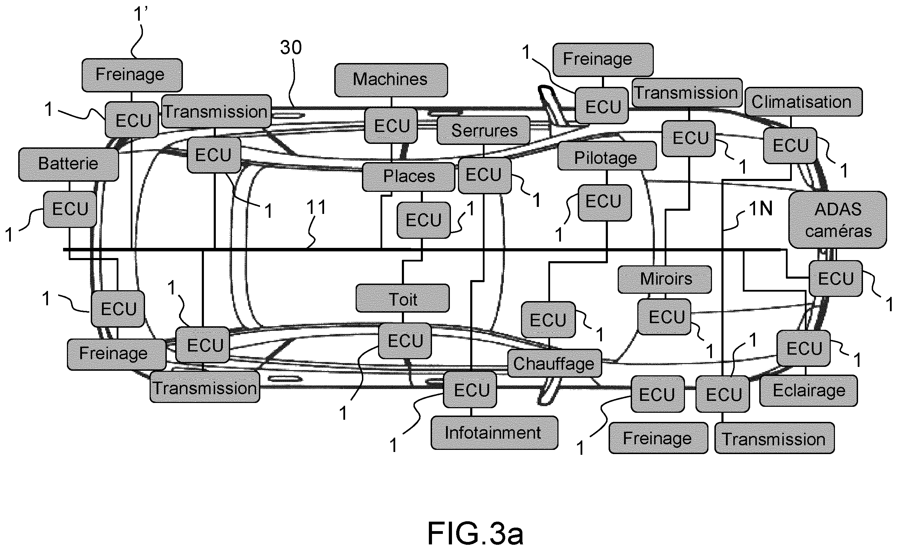

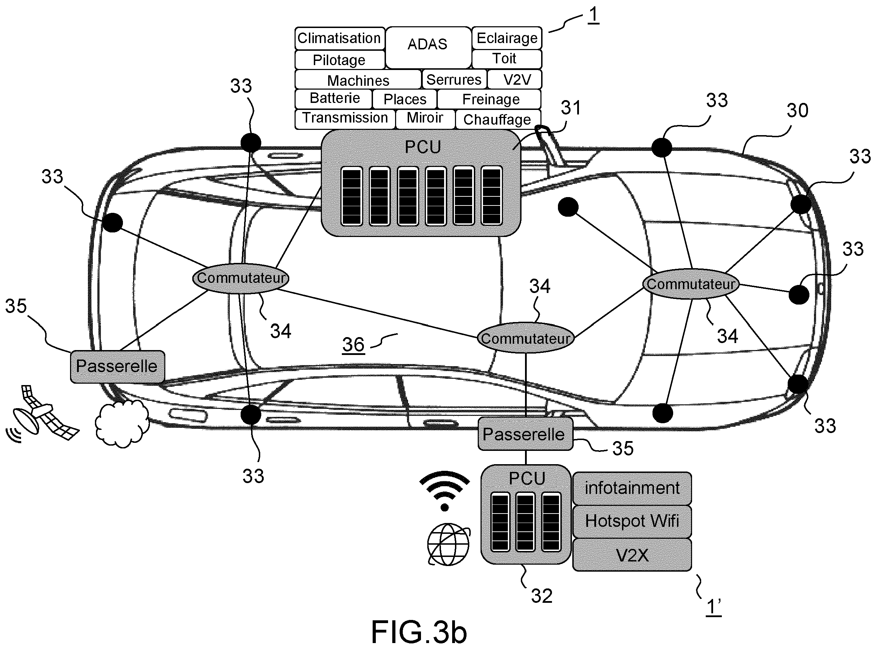

La figure 3b illustre le principe d'une architecture électronique pour automobile selon l'invention, en regard de la figure 3a illustrant une architecture selon l'art antérieur.

Plus particulièrement la figure 3a reprend l'architecture selon l'art antérieur de la figure 2 mais en illustrant les traitements et fonctions pilotés par les ECU en donnant une indication sur la localisation géographique de ces derniers dans le véhicule 30. Un seul bus multiplexé 11 est représenté, autour duquel sont regroupés tous les ECU 1 représentés. Les fonctions pilotées par les ECU sont indiquées dans des cases 1'.

Pour illustrer le principe de l'invention, la figure 3b présente un exemple d'architecture reprenant pour l'essentiel les fonctions de la figure 3a.

L'invention propose une architecture de calcul mutualisée et centralisée pour la gestion des fonctions d'un véhicule. En particulier, les ECU et les bus multiplexés de la figure 3a sont remplacés par un calculateur physique central 31 et par un réseau temps-réel reliant des modules d'interface 33 agrégeant des signaux issus de capteurs et distribuant des signaux de commandes. Il est possible de prévoir un ou plusieurs calculateurs secondaires pour des fonctions qui ne relèvent pas du calculateur principal, notamment pour des fonctions non critiques.

L'architecture de la figure 3b comporte à titre d'exemple un calculateur secondaire 32. Le calculateur central 31 est affecté à la gestion du véhicule proprement dit. Le calculateur secondaire 32 est affecté à la gestion de la connectivité et du multimédia. Ces deux domaines de fonctionnalités ont des criticités et des vulnérabilités différentes et peuvent donc être dissociés pour plus de sûreté et de sécurité. Par exemple le premier calculateur 31, en charge de fonctions de sécurité du véhicule nécessite de la redondance tandis que le second calculateur 32, chargé du multimédia, n'en a pas besoin. Une économie est avantageusement réalisée en ne redondant que le calculateur central. Pour la sûreté, le deuxième calculateur traite de fonctions ouvertes vers l'extérieur comme le domaine multimédia par exemple, protégeant ainsi le calculateur principal de tout risque d'intrusion, en utilisant notamment des techniques de protection avancée entre les deux calculateurs.

Les fonctions 1' pilotant les actionneurs et traitant les données issues des capteurs, exécutées par les ECU dans la figure 3a, sont exécutées par le calculateur central 31 et par le calculateur secondaire 32. Ces calculateurs 31, 32 pourront être appelés par la suite PCU pour « Physical Computing Unit ».

Le réseau de communication 36 reliant les différents modules 33 et les PCU est par exemple du type Ethernet TSN (« Time-Sensitive Networking »), mais d'autres types de réseau de communications temps réel sont possibles, déterministes ou non. A ce stade, on peut préciser que selon l'invention les modules 33 agrègent tous les signaux des capteurs et actionneurs qui étaient reliés directement aux ECU dans l'art antérieur. Ils mutualisent un lien physique à vitesse supérieure (Ethernet) afin de diminuer le câblage. Cette mutualisation est possible car le débit de communication et la latence de ce lien physique sont suffisants pour transférer les données des capteurs/actionneurs reliés aux modules d'agrégation 33 jusqu'au calculateur central en un temps compatible avec le contrôle des fonctions du véhicule.

Il est possible de prévoir un ou plusieurs commutateurs 34 à l'intérieur du réseau, chaque commutateur adressant un ou plusieurs modules d'agrégation/PCU. L'exemple d'architecture de la figure 3b comporte trois commutateurs.

On voit dans cet exemple les avantages de la répartition géographique des modules d'agrégation 33, en effet la liaison entre l'avant et l'arrière du véhicule est ici assurée par un lien physique mutualisé, via le réseau temps-réel, au lieu de plusieurs câbles comme dans l'art antérieur. Pour des raisons de sûreté, des techniques spécifiques comme par exemple de la duplication ou de la redondance peuvent être appliquées à l'interconnexion 36 dans le véhicule.

De leur côté, les deux calculateurs 31, 32, mutualisés, sont chargés de réaliser la gestion du véhicule, cette gestion étant dévolue aux ECU distribués dans les solutions de l'art antérieur tel qu'illustré notamment par la figure 3a.

L'architecture peut comporter des passerelles 35 (« gateway ») complétant le réseau d'interconnexion 36, pour connecter le réseau local à d'autres réseaux, Internet par exemple, en toute sécurité. Ces autres réseaux peuvent également être des réseaux internes au système.

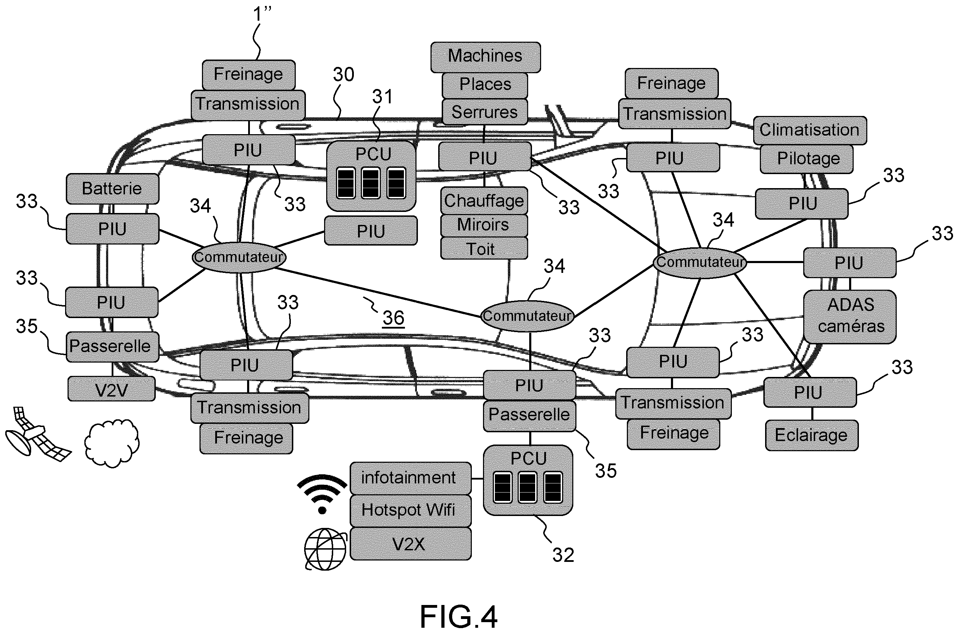

La figure 4 présente l'architecture de la figure 3b de façon plus détaillée. En particulier, on précise à titre d'exemple pour chaque module 33 des fonctions dépendant des signaux des capteurs/actionneurs reliés à ces modules. Elle précise également les modules 33 d'agrégation de signaux et de distribution de commandes avec pour chacun les capteurs ou actionneurs 1" qu'ils pilotent. Les différentes fonctions du véhicule (propulsion, freinage, éclairage, climatisation, infotainment, ...) sont mises en œuvre via l'ensemble de ces capteurs et actionneurs. Plus précisément, les capteurs et actionneurs participent à l'exécution des fonctions, le calcul étant réalisé sur le PCU 31, et éventuellement sur un ou plusieurs calculateurs secondaires 32.

Ces modules 33 pourront être appelés par la suite PIU (« Physical Interface Unit »). Tous ces PIU sont interconnectés grâce au réseau temps-réel permettant notamment de maîtriser les latences de transmission des signaux de synchronisation de l'ensemble du système, et permettent surtout de maîtriser les latences de transmissions des paquets contenant les données des capteurs et les données/commandes des actionneurs. Conformément à la description qui précède, le réseau peut être composé de commutateurs 34 et de portails ou passerelles (gateway) permettant le routage des paquets de données du réseau et la sécurisation de la connexion entre l'architecture du système et le monde extérieur (connectivité multimédia, par exemple). A cet effet, dans l'exemple de la figure 3b et de la figure 4, le PCU affecté au domaine multimédia accède au réseau via une gateway 35, cette dernière étant interfacée au réseau via un PIU.

Cette architecture peut donc exécuter des fonctions de haute criticité, telles par exemple le pilotage du groupe motopropulseur, la surveillance de la batterie ou encore le système de sécurité ADAS notamment. Elle peut en même temps exécuter le pilotage de fonction de faible criticité comme la climatisation par exemple, ainsi que d'autres types de services. Toutes ces fonctions peuvent être exécutées par un même PCU 31 grâce aux technologies de mutualisation de ressources de calcul telles que des hyperviseurs par exemple.

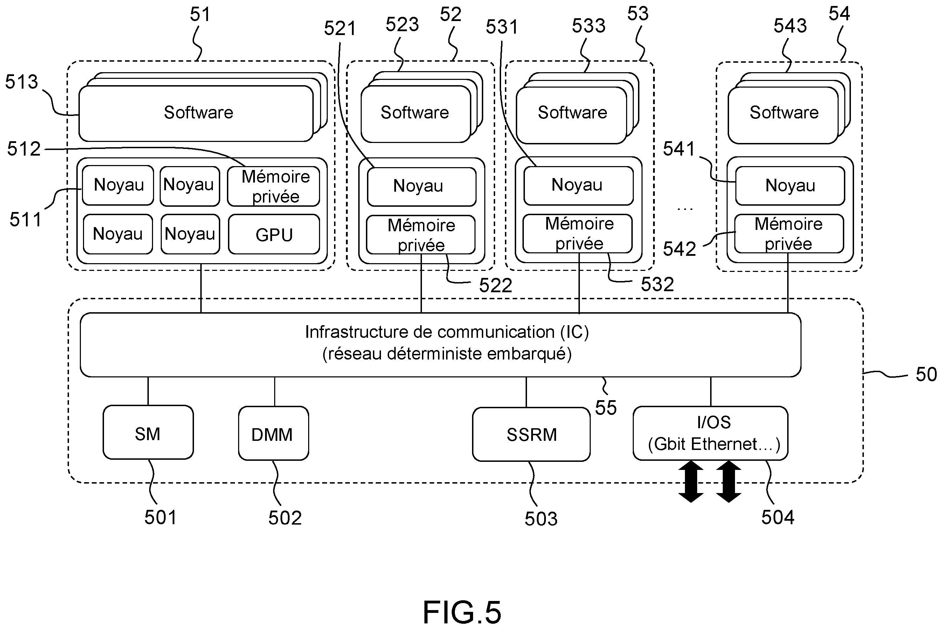

La figure 5 illustre la composition d'un calculateur 31, 32. Un PCU est un système modulaire, à basse consommation électrique, composé d'une carte mère 50 et d'un ou plusieurs sous-systèmes de calcul 51, 52, 53, 54. Les sous-systèmes peuvent être totalement hétérogènes entre eux, c'est-à-dire qu'elles peuvent comporter des processeurs 511, 521, 531, 541 de différents types et/ou de différentes spécificités. Ces sous-systèmes peuvent être intégrés à la carte mère ou disponibles (intégrés) sous forme de cartes filles comme illustré dans l'exemple de la figure 5. Dans cet exemple, quatre cartes filles 51, 52, 53, 54 sont reliées à la carte mère 50.

Les sous-systèmes communiquent avec la carte mère et le reste du système grâce à une infrastructure de communication déterministe 55 intégrée sur la carte mère.

Dans l'exemple particulier de la figure 5, les ressources de calcul des sous-systèmes sont composées pour chacune d'un ou plusieurs processeurs 511, 521, 531, 541 couplés à une mémoire privée 512, 522, 532, 542 aptes à exécuter une ou plusieurs partitions logicielles 513, 523, 533, 543. Par exemple, ces partitions logicielles peuvent être des applications, des processus (dont la ségrégation est réalisée par des mécanismes logiciels de systèmes d'exploitation), ou même des systèmes d'exploitation complet, séparés avec l'aide des mécanismes d'hyperviseurs.

Le PCU comporte aussi des blocs fonctionnels permettant de supporter l'exécution de fonctions annexes permettant de garantir ou d'améliorer des propriétés de l'architecture. Des services, de type ségrégation d'applications ou protection de données, sont utilisés pour supporter l'exécution des partitions logicielles sur chaque ressource de calcul, un hyperviseur peut par exemple être utilisé.

Un bloc fonctionnel « Data Management Module » (DMM) 502 permet d'assurer aux différents composants du véhicule un accès unifié aux données liées aux capteurs et actionneurs répartis dans le véhicule ainsi qu'aux données générées par les sous-systèmes. Ce bloc fonctionnel 502 peut par exemple être réalisé via un service de mémoire distribuée virtuellement partagée (une DSM - Distributed Shared Memory) utilisé pour simplifier les communications entre les sous-systèmes et stocker et gérer l'ensemble des données du véhicule pour en faciliter l'accès. Ce service peut être réalisé via un service d'un hyperviseur ou d'un système d'exploitation par exemple. Ce service distribué peut être supporté par un composant matériel de gestion des données permettant un accès déterministe aux capteurs et actionneurs par l'intermédiaires des PIU et aux données générées par les sous-systèmes de calcul 51, 52, 53, 54. En combinant une vision unifiée des données du véhicules avec des mécanismes de maîtrise des temps d'accès aux données, le bloc fonctionnel DMM 502 a notamment l'avantage d'apporter une garantie temporelle des accès aux données répartis dans le véhicule.

La mutualisation importante permise par l'architecture selon l'invention peut reposer notamment de façon avantageuse sur ce bloc fonctionnel 502.II fournit une vue unifiée des différentes mémoires appartenant à des ressources distribuées au niveau des capteurs et des actionneurs. Afin de conserver les bonnes propriétés nécessaires à un système automobile (maîtrise du temps, faible latence ...), le bloc fonctionnel 502 s'appuie par exemple sur un accélérateur matériel pour maintenir la cohérence des données au sein du système, par exemple en pré-chargeant des données de capteurs à intervalles réguliers de manière autonome. Toutes les communications avec les capteurs et actionneurs, via les PIU, passent par la mémoire virtuelle, ce qui permet de présenter les mémoires distribuées dans le système (mémoires des capteurs, actionneurs, PIUs, PCUs ...) comme une seule machine à mémoire partagée. On obtient une vision unifiée des mémoires, accessible à tous les calculateurs. Un avantage de cette solution est que si l'on ajoute des attributs aux données, un système de contrôle d'accès efficace et centralisé permet de sécuriser fortement les données du véhicule et de renforcer le concept de domaines virtuels globaux présentés ci-après.

Un bloc fonctionnel « Synchonisation Manager » (SM) 501 permet d'assurer la synchronisation entre les sous-systèmes de calcul, possiblement répartis dans le véhicule. Ce bloc fonctionnel 501 peut être par exemple implémenté par un accélérateur matériel appelé HSM (Hardware Synchronisation Manager). Les blocs fonctionnels DMM et SM peuvent être couplés (voire par exemple implémentés dans le même bloc fonctionnel) afin de réaliser par exemple des synchronisations liées aux données. Un bloc fonctionnel 503 appelé « Safety and Reliability Support Module » (SSRM) permet d'assurer et de supporter les services liés à la sûreté du fonctionnement du système et sa fiabilité, par exemple en gérant les redondances dans le système. Ce bloc fonctionnel peut être par exemple implémenté par des services logiciels répartis, possiblement supportés par des accélérateurs matériels ou des interfaces spécialisées pour la duplication.

Dans l'exemple de réalisation de la figure 5, les différentes fonctions décrites ci-dessus sont assurées par des blocs fonctionnels propres à chaque fonction, chaque bloc communiquant avec le reste du système via l'infrastructure de communication 55. Il est possible de regrouper certaines de ces fonctions dans un même bloc fonctionnel.

Cette architecture carte mère - cartes filles est avantageusement flexible et composable. Elle constitue un système générique qui peut cibler différentes gammes de véhicules en assurant les fonctions actuelles et futures, comme des applications de conduite autonome ou encore des applications d'infotainment complexes par exemple. Un point important réside dans la possibilité de réutiliser les différents composants du système dans le plus grand nombre de véhicules afin de réduire les coûts de production.

L'utilisation de cartes filles permet d'utiliser les ressources adéquates par rapport aux propriétés des fonctions à exécuter, par exemple les fonctions utilisant des écrans ou du traitement d'images peuvent être regroupées sur des cartes avec un SoC doté d'un GPU (Graphics Processing Unit ou Processeur Graphique) tandis que des fonctions à forte criticité peuvent être envoyées sur une carte fille avec une maîtrise renforcée du temps. Ainsi, l'architecture permet avantageusement d'optimiser le système de calcul en regroupant les fonctions ayant les mêmes propriétés sur un sous-système de calcul optimisé pour assurer ces propriétés (types de calcul, sécurité/sûreté, criticité temporelle, etc.).

Ainsi, lors de la conception (ou pendant la vie du véhicule en cas de mise à jour matérielle), l'architecture même du système peut être optimisée par le découpage et/ou la séparation de fonctions, et leur regroupement selon leurs propriétés sur des ressources matérielles (sous-systèmes) adaptées et possiblement fortement hétérogènes (avec l'inclusion d'accélérateurs dédiés, par exemple). Ce regroupement physique de fonctions/parties de fonctions sur des sous-systèmes, fonctions ségrégées entre elles par les partitions logicielles, permet de tailler l'ensemble des sous-systèmes au plus juste, l'architecture étant suffisamment flexible pour être adaptée a posteriori, par exemple par le biais des cartes filles.

Par ailleurs, l'utilisation de cartes filles reliées à une carte mère permet l'utilisation d'interfaces à haute bande passante et à faible latence, en fonction des besoins, pour de l'acquisition d'images brutes par exemple.

La carte mère a une fonction de dorsale réseau permettant d'interconnecter les cartes filles entre elles ainsi qu'avec le reste du système, cette interface avec le reste du système étant réalisée par des liens dupliqués (ou en tous cas redondants, et pas nécessairement homogènes), par exemple des liens gigabits Ethernet 504. Cette carte mère contient aussi des fonctions observant l'intégrité du système. Des fonctions spécifiques peuvent être ajoutées comme par exemple l'arbitrage d'accès, de la protection ou de la gestion de la complexité, de l'hétérogénéité ou des paramètres non fonctionnels comme la température, le vieillissement des composants ou encore la consommation énergétique.

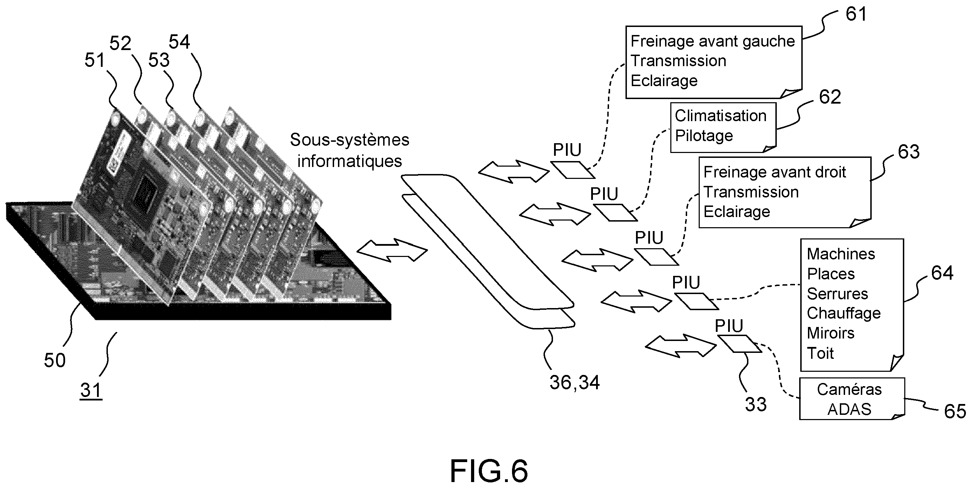

La figure 6 illustre une représentation d'une architecture selon l'invention avec un PCU 31, composé d'une carte mère 50 et de cartes filles 51, 52, 53, 54 communiquant avec des PIU 33, répartis géographiquement dans le système à contrôler, via un réseau 36 implémenté par un réseau de type Ethernet. Les PIU agrègent les signaux des capteurs des différents domaines géographiques 61, 62, 63, 64, 65 et envoient des commandes vers ces mêmes domaines. Ces domaines peuvent par exemple correspondre à l'avant gauche, l'avant droit, l'arrière gauche, l'arrière droit ou l'habitable du véhicule. Plus précisément dans le cas de la figure 6, chaque PIU est affecté à plusieurs domaines fonctionnels (freinage, motopropulseur, aide à la conduite automobile, etc.) en adressant plusieurs capteurs et/ou actionneurs liés à son domaine géographique. En d'autres termes, les PIU n'ont pas prioritairement une affectation par domaine fonctionnel, mais une affectation géographique. Il peut exister, pour certains systèmes, des cas particuliers de mise en œuvre où l'affectation par domaines géographiques corresponde à l'affectation par domaines fonctionnels.

Comme indiqué précédemment, les PIU ont seulement pour fonction d'agréger les données des capteurs et de redistribuer les commandes, ils n'effectuent pas de traitements de haut niveau dans ce sens où ces traitements n'impliquent pas de prise de décision autonome, les contrôles et prises de décision étant toujours prises au niveau du calculateur central 31 ou éventuellement du ou des calculateurs secondaires 32.

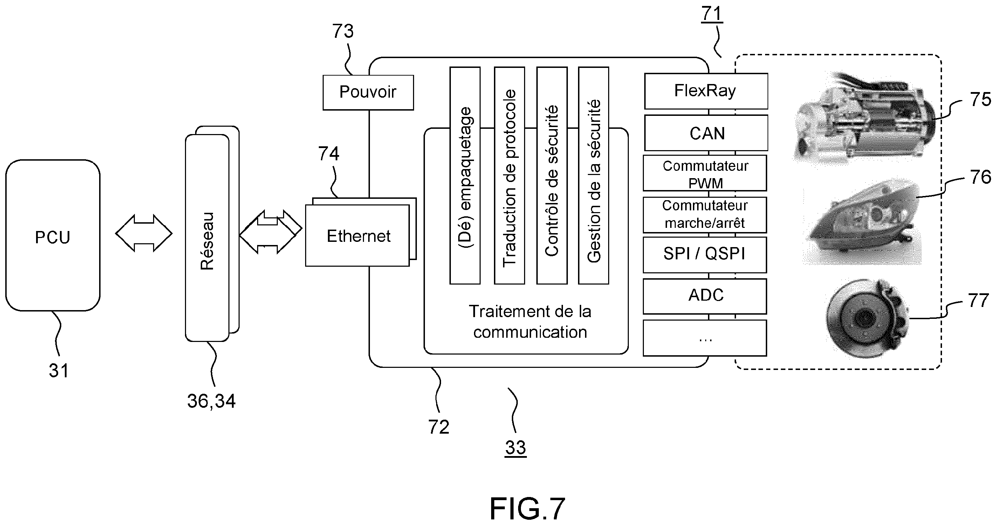

La figure 7 illustre un exemple de réalisation d'un PIU. Le PIU est un composant réseau permettant de relier les capteurs et les actionneurs au reste de l'architecture électronique mais aussi aux gateways 35 et autres éléments du réseau. Dans l'exemple de la figure 7, le PIU représenté adresse trois domaines fonctionnels par les capteurs et actionneurs auxquels il est relié : la motorisation 75, l'éclairage 76 et le freinage 77. Ce PIU peut par exemple être placé à l'avant gauche d'un véhicule et ainsi être relié aux capteurs et actionneurs placés dans une zone de l'avant gauche.

L'architecture du PIU de la figure 7 est générique, en particulier elle ne dépend pas des domaines fonctionnels adressés, seul le dimensionnement (système de calcul, mémoire) ou les interfaces pouvant être dépendant. Cela permet notamment de réduire la difficulté d'intégration et aussi les coûts de production. Plus particulièrement, la figure 7 présente la structure générale d'un PIU. Le PIU a notamment comme fonction de mettre en paquets les signaux provenant des capteurs afin de les transmettre au PCU (ou à plusieurs PCU) et de distribuer les commandes aux actionneurs par traitement de paquets provenant du PCU.

Ainsi, le PIU a la charge de présenter au réseau 36, et notamment au PCU, une vision unifiée des signaux vers les actionneurs (et éventuellement vers les capteurs) et provenant des capteurs (et éventuellement provenant des actionneurs) qui peuvent être en pratique fortement hétérogènes, en effectuant notamment des traductions de protocoles de communication. Les interfaces 71 avec les capteurs et actionneurs gérés par le PIU peuvent donc être de différents types comme par exemple FlexRay, CAN, switch PWM, SPI, QSPI ou ADC. La vision unifiée des capteurs et actionneurs par le PCU se traduit en pratique par un protocole unique de communication des données depuis ou vers un PIU (vu du côté PCU), quelle que soit l'interface de communication avec un capteur et/ou un actionneur.

Le PIU est ainsi apte à communiquer avec ces différents standards pour mettre en forme les données reçues des capteurs/actionneurs en paquets Ethernet temps réel transmis sur le réseau 36 et inversement envoyer des commandes dans les différents standards, commandes provenant du PCU sous forme de paquets Ethernet. Un autre protocole qu'Ethernet peut bien sûr être utilisé.

Le réseau d'interconnexion temps réel 36 a une bande passante plus importante que les interfaces entre les PIU et les capteurs/actionneurs. Ceci permet donc de diminuer le nombre de câbles dans le véhicule en mutualisant ce lien d'interconnexion. Avantageusement, le PIU prend des signaux hétérogènes provenant des capteurs en s'assurant de la compatibilité temporelle de leur envoi avec le fonctionnement du véhicule (par une configuration préétablie et modifiable par exemple) et remplit au maximum chaque paquet transmis afin notamment de maximiser la bande passante et de minimiser la latence, en regroupant des données numériques de signaux différents dans un même paquet. Inversement, les paquets provenant des calculateurs agrègent un maximum de données de commandes numérisées à destinations des actionneurs adressés par le PIU, le PIU se chargeant de redistribuer ces commandes en s'assurant de la compatibilité temporelle de leur transmission avec le fonctionnement du véhicule (par une configuration préétablie et modifiable par exemple), assurant ainsi une maîtrise temporelle.

A titre d'exemple, trois composants d'un véhicule sont représentés sur la figure 7, un moteur électrique 75, un phare avant 76 et un système de freinage 77. Un ou plusieurs actionneurs et capteurs non représentés sont associés à chacun de ces composants. Ils sont commandés par des actionneurs, eux-mêmes commandés par les données de commandes issues du PCU transmises via le réseau de communication 36, le processeur de communication 72 et les interfaces de communications 71. De même, des capteurs (caméras, capteurs de vitesses, capteurs de températures, ...) transmettent des données au PCU via le cheminement inverse.

Pour prendre en compte les contraintes des domaines fonctionnels, le PIU est également en charge de différents services comme la sûreté, la sécurité (chiffrement/déchiffrement de données par exemple), le contrôle d'intégrité des messages et/ou la gestion de la redondance des messages. Le traitement des paquets, les traductions de protocole et les fonctions de sécurité et de contrôle sont réalisées par un processeur de communication 72. Un bloc d'alimentation électrique 73 est également prévu. Il peut être ou non intégré dans le PIU. Avantageusement, l'alimentation électrique globale du système peut ainsi être répartie à l'image de la répartition géographique des PIUet du ou des PCU. L'architecture complète est avantageuse de ce point de vue. En effet, l'arbre électrique peut avoir sa propre topologie (ou suivre les interconnexions du réseau de communication), mais la commande est avantageusement transmise par le réseau de commande informatique du système.

La consommation électrique peut avantageusement être optimisée. En effet un PIU peut être alimenté uniquement en cas de besoin, la commande de mise en marche du bloc d'alimentation électrique 73 ainsi que les alimentations des capteurs/actionneurs reliés aux PIU pouvant être transmise par un signal de commande transitant par le réseau 34, 36, 74. A cet effet, une interface appropriée est intégré dans le bloc d'alimentation, un transistor de type MOS intelligent ou un interrupteur intelligent par exemple. Grâce à la vision globale de l'architecture par le PCU ainsi que la possibilité de transmettre des signaux de commande à grain fin sur le réseau d'interconnexion, une gestion très fine des alimentations électrique est possible.

Un point important de l'architecture réside dans sa capacité à mutualiser le réseau d'interconnexion 36. Etant donnés les débits et les latences en jeu, ceci nécessite une bande passante importante et une capacité d'envois de messages périodiques ou apériodiques. L'utilisation d'un lien Ethernet 74 par exemple pour effectuer les communications permet d'obtenir la bande passante nécessaire. Ce lien apporte également de la flexibilité et permet l'utilisation des différents standards de communication. La gestion temporelle, garantissant la maîtrise des temps de propagation des informations, peut se baser sur des standards supportant le transport d'informations de criticité différente.

Un avantage notoire du système électronique selon l'invention est sa capacité à supporter de manière avantageuse un réseau permettant la ségrégation des communications par exemple via l'utilisation de liens virtuels (type VLAN, etc.) et donc des réseaux privés virtuels afin de réaliser des domaines virtuels à la demande et par exemple séparer les domaines critiques des domaines non critiques, sans toutefois allouer physiquement une partie de l'architecture à un domaine particulier, comme dans le cas des architectures basées sur les domaines fonctionnels.

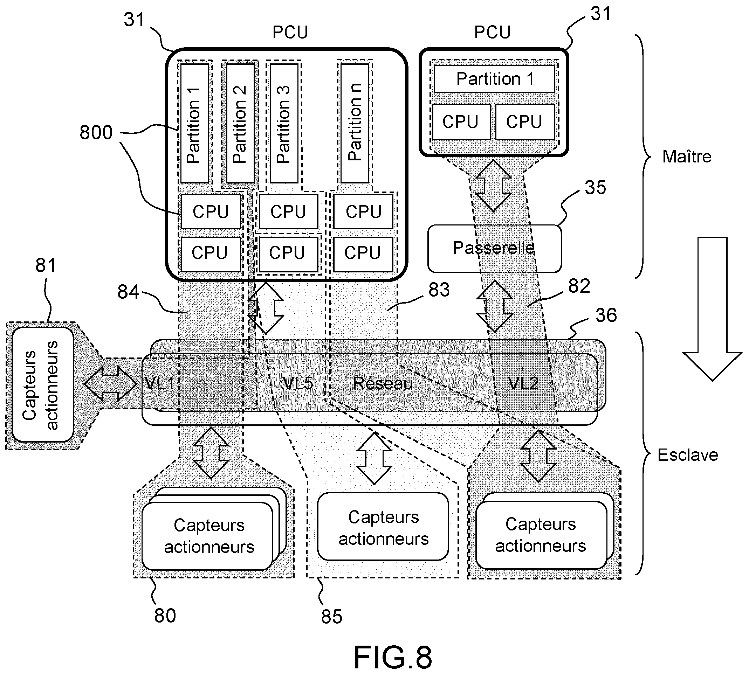

La figure 8 montre comment le recours aux domaines virtuels permet de regrouper logiquement des capteurs et actionneurs physiquement distribués et de les séparer en diverses zones virtuelles indépendantes. Plus précisément, la figure 8 illustre des domaines virtuels 81, 82, 83, 84, 85 implémentés grâce à l'utilisation de liens virtuels entre différents composants et parties/sous-ensembles du système. Ces domaines virtuels sont par exemple une combinaison de technologies de ségrégation dont fait partie un réseau local virtuel ou VLAN (Virtual Local Area Network). Par exemple un domaine virtuel 84 couvre plusieurs processeurs (CPU) et une partition de traitement du PCU 31 (formant une machine virtuelle), ainsi que les interfaces d'agrégation et de commande d'un groupe de capteurs et d'actionneurs 80 qui peuvent être répartis ou distribués dans le véhicule. Ce peut être le domaine virtuel qui permet de gérer le domaine moteur avec ses capteurs et actionneurs répartis dans le véhicule, et la machine virtuelle correspondante 800.

Plus généralement, selon l'invention on peut réaliser des domaines virtuels à l'aide d'une combinaison de techniques, notamment au moyen d' attributs de données placées par les PIUs 33, de liens virtuels sur le réseau d'interconnexion 36, de la gestion des attributs dans la DMM 502, ou encore des techniques de ségrégation matérielles (un processeur par domaine par exemple) et logicielles, avec dans ce cas un processeur pour plusieurs domaines, la ségrégation étant réalisé par de la protection mémoire obtenue par les fonctions de base d'un système d'exploitation ou encore par un hyperviseur, qui permet de séparer deux systèmes d'exploitation tournant sur la même ressource matérielle. En ce qui concerne la technique faisant appel à des attributs de données PIU, celle-ci consiste notamment à séparer des groupes de données de capteurs ou actionneurs différents sur un PIU en attribuant à chaque groupe un attribut différent.

Dans cette architecture, ce ne sont pas les actionneurs ou les capteurs qui initialisent les communications, c'est le PCU 31, 32. Cet exemple de configuration est ainsi du type maître/esclave où le maître est le PCU. Le fait que le PCU demande des données aux PIUs est un exemple de mise en œuvre, il est bien sûr possible de prévoir une mise en œuvre où les PIUs envoient des données vers le PCU sans initialisation des communications par ce dernier, sans contexte maître/esclave.

Dans ce réseau, les commutateurs permettant d'interconnecter les composants entre eux sont conçus pour supporter les bonnes propriétés du système comme la bande passante, la faible latence, la sécurité et la sûreté. Le bloc gateway 35 assure la sécurité en isolant l'architecture des communications extérieures traitées par un deuxième PCU 32.

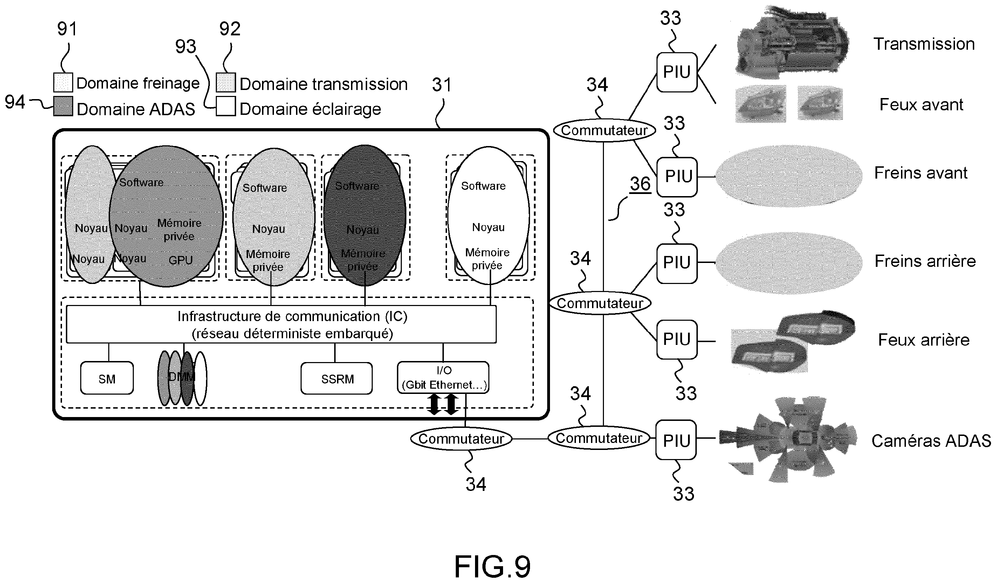

La figure 9 illustre les domaines virtuels précédemment décrits dans une architecture selon l'invention, en mettant en reflet les différents contributeurs matériels et logiciels. L'invention crée avantageusement des domaines virtuels pour séparer les contraintes liées à l'embarquement physique des composants du système des contraintes d'utilisation des données et d'allocation des fonctions du véhicule sur les cœurs de calcul. Ces domaines virtuels peuvent être efficacement créés en utilisant les propriétés de l'architecture : des domaines logiques/virtuels peuvent par exemple être créés (même dynamiquement) en utilisant l'association entre les liens virtuels fournis par l'interconnexion 34, 36, le bloc fonctionnel de gestion de données DMM 502, les attributs de sécurité sur les données gérées par ce bloc fonctionnel DMM 502 et l'utilisation de services de ségrégation logiciels et/ou matériels entre les applications/fonctions tels que les technologies d'hypervision ou de systèmes d'exploitation. Ces domaines peuvent aussi être supportés par des technologies d'authentification de capteurs/actionneurs ou de sous-systèmes, par exemple implémentés via des services d'authentification.

L'exemple de la figure 9 illustre quatre domaines virtuels créés sur l'architecture par l'utilisation de la combinaison de ses technologies de ségrégation :
- un domaine virtuel pour le domaine du freinage 91 ;
- un domaine virtuel pour le domaine de la propulsion 92 ;
- un domaine virtuel pour le domaine des phares (éclairage) 93 ;
- et un domaine virtuel pour le domaine des caméras 94 pour l'aide à la conduite (ADAS).

Les calculateurs du PCU 31 communiquent avec les PIU 33 distribués dans le véhicule, via le réseau de communications. Des commutateurs 34 supportant des liens virtuels (par exemple VLAN) sont répartis pour diriger les communications vers les PIU. La figure 9 illustre bien la dichotomie partie physique/partie logique. Les phares arrière et avant, éloignés physiquement sont dans un même domaine virtuel (et potentiellement synchronisés) bien qu'étant reliés à des PIU différents. Il en est de même pour les freins avant et arrière.

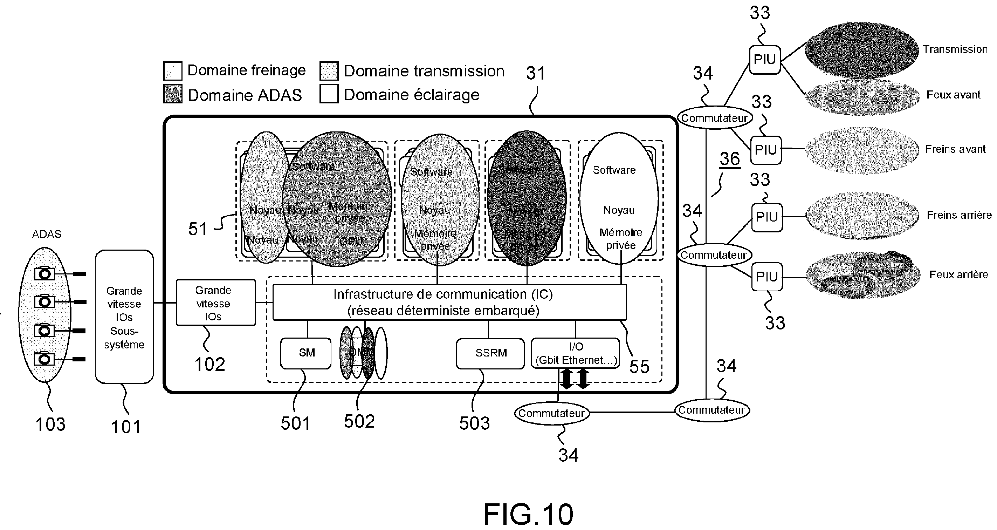

La figure 10 illustre une variante de réalisation d'une architecture selon l'invention. Dans l'exemple de la figure 10, le système décrit à la figure 9 est complété par un sous-système 101 pour la gestion efficace des signaux haute vitesse, à la fois en acquisition (capture de flux brut par une ou plusieurs caméra haute définition) et en commande pour un écran par exemple. Ce sous-système, composé d'une ou plusieurs cartes filles, peut être considéré comme un PIU particulier en terme de positionnement dans l'architecture. Une fonction de ce sous-système 101 est notamment de prendre en charge des capteurs et actionneurs à haute vitesse de transmission présents dans l'architecture et de retransmettre les informations au calculateur central PCU en vue de leur traitement réel (capacité à transmettre des flux bruts à faible latence synchronisés pour certains traitements sensibles au bruit de compression par exemple). Par exemple, l'utilisation d'un tel sous-système est réalisée dans le cas où le débit demandé par la transmission des données est plus important que le débit maximal admissible sur le réseau d'interconnexion 36. L'utilisation de ce sous-système peut aussi être avantageuse dans le cas où la latence du réseau d'interconnexion 36 est trop importante par rapport à la latence admissible pour l'application.

Cependant, au vu des débits très élevés potentiellement demandés, la liaison entre le PCU 31 et ce sous-système 101 peut être privilégiée : par exemple, un bloc d'entrées/sorties à haute vitesse 102 peut être utilisé pour relier le sous-système 101 au PCU 31. Ce bloc permet de positionner le sous-système 101 comme une carte fille du PCU ou de le relier au PCU par une liaison série haute vitesse par câble s'il est déporté dans le véhicule. Cela permet de conserver les propriétés de modularité de l'architecture et la possibilité d'adapter le sous-système aux types de capteurs ou d'actionneurs, même en cours d'exploitation du véhicule (par exemple lors d'une mise à jour des capteurs en second montage). Au niveau de l'aspect fonctionnel du système, ce sous-système 101 est cependant totalement intégré au reste de l'architecture de manière à conserver les bonnes propriétés de sécurisation, de contrôle d'accès aux données, de leur gestion par le bloc de gestion des données 502 et le bloc de synchronisation 501 notamment. Ainsi, même si elle est privilégiée, cette liaison ne remet pas en cause les propriétés de l'architecture globale vis-à-vis de ce sous-système d'entrées et de sorties. Dans l'exemple de la figure 10, des caméras 103 haute vitesse sont reliées directement au sous-système dans le cadre de l'acquisition de signaux pour l'aide à la conduite. Les images sont traitées par une carte fille 51. Les données sont gérées par les blocs fonctionnels DMM 502 et SM 501, avec protection de données basée sur des attributs. La liaison entre le sous-système 101 et le PCU 31 est par exemple une liaison haute vitesse utilisant un protocole passant par un connecteur certifié automobile dans le cadre d'une liaison carte mère - carte fille, contrairement aux PIU qui sont par exemple sur une liaison de type Ethernet ou autre. On peut cependant noter que les deux types de liaison arrivent sur l'infrastructure de communication 55 de la carte mère du PCU qui est un réseau de communication déterministe, l'ensemble de l'architecture permettant de garder les propriétés de synchronisation entre les différents éléments.

## Revendications

1. Architecture électronique embarquée dans un système assurant la gestion des fonctions dudit système, lesdites fonctions étant mises en œuvre via un ensemble de capteurs et d'actionneurs, **caractérisée en ce qu'**elle comporte au moins :
- un calculateur central (31) ;
- un réseau de communication temps réel (34, 36) ;
- un ensemble de modules d'interface (33) affectés chacun à une zone géographique dudit système, chaque module :
∘ agrégeant des signaux issus d'au moins un desdits capteurs de la zone qui lui est affecté et envoyant lesdits signaux audit calculateur central via ledit réseau de communication ;
∘ et/ou distribuant des signaux de commande vers au moins un desdits actionneurs de la zone qui lui est affectée ;
ledit calculateur central pilotant lesdits actionneurs en fonction des signaux issus desdits capteurs, les signaux de commande desdits actionneurs étant envoyés auxdits modules d'interface (33) via ledit réseau de communications, au moins un desdits modules d'interface (33) agrègeant les signaux issus de capteurs de plusieurs domaines fonctionnels et distribue des commandes vers des actionneurs de plusieurs domaines fonctionnels, lesdits capteurs et actionneurs étant situés dans la zone géographique affectée audit au moins module (33).

2. Architecture selon la revendication 1, **caractérisé en ce qu'**au moins un desdits modules d'interface agrège également des signaux issus d'au moins un desdits actionneurs et/ou distribue des signaux vers au moins un desdits capteurs.

3. Architecture selon l'une quelconque des revendications précédentes, **caractérisée en ce que** ledit calculateur central (31, 32) est composé d'une carte mère (50) et de sous-systèmes de calcul (51, 52, 53, 54, 55), chaque sous-système comprenant un ou plusieurs processeurs (511, 521, 531, 541) couplés à une mémoire privée (512, 522, 532, 542) aptes à exécuter plusieurs partitions logicielles (513, 523, 533, 534), lesdits sous-systèmes communiquant entre elles et avec ledit réseau de communication (34, 36) au moyen d'une infrastructure d'interconnexion (55) implantée sur ladite carte mère.

4. Architecture selon la revendication 3, **caractérisée en ce qu'**elle comporte un bloc fonctionnel centralisé de gestion des données (502) permettant d'accéder aux données des mémoires présentes dans le calculateur (31, 32) et dans lesdits modules (33), ledit bloc fonctionnel (502) assurant aux différents composants de ladite architecture un accès unifié aux données liées aux capteurs et actionneurs répartis dans ledit système ainsi qu'aux données générées par lesdits sous-systèmes de calcul.

5. Architecture selon la revendication 4, **caractérisé en ce que** ledit bloc fonctionnel (502) est réalisé au moyen d'un service de mémoire distribuée virtuellement partagée entre ledit calculateur (31, 32) et lesdits modules (33), de sorte que toutes les communications dudit calculateur central (31, 32) avec lesdits capteurs et actionneurs transitent par ladite mémoire virtuelle et de sorte que les mémoires distribuées dans ladite architecture et l'ensemble des capteurs et actionneurs se présentent audit calculateur central comme une seule mémoire partagée.

6. Architecture selon la revendication 5 en ce que le ledit bloc fonctionnel (502) permet de sécuriser l'accès aux données via l'utilisation d'attributs associés aux données.

7. Architecture selon l'une quelconque des revendications 3 à 6, **caractérisée en ce qu'**elle comporte un bloc fonctionnel (501) permettant d'assurer la synchronisation entre lesdits sous-systèmes de calcul.

8. Architecture selon l'une quelconque des revendications 3 à 7, **caractérisée en ce qu'**elle comporte un bloc fonctionnel (503) permettant d'assurer et de supporter les services liés à la sûreté de fonctionnement dudit système.

9. Architecture selon l'une quelconque des revendications précédentes, **caractérisée en ce qu'**un module d'interface (33) comporte au moins :
- un processeur de communication (72) ;
- des interfaces de communication (71) entre ledit processeur (72) et des actionneurs et/ou capteurs ;
- une interface de communication (74) entre ledit processeur et ledit réseau de communication (34, 36) ;
ledit processeur de communication ayant pour fonction d'ordonner les données issues desdits capteurs en paquets pour les transmettre audit calculateur central (31, 32) via ledit réseau de communication et de distribuer les données de commande issues dudit calculateur central, via ledit réseau de communications, auxdits actionneurs.

10. Architecture selon la revendication 9, **caractérisée en ce que** lesdites interfaces de communications (71) entre ledit processeur et lesdits actionneurs et/ou capteurs étant de différents types, ledit processeur (72) effectue des traductions de protocoles de communication desdits interfaces pour échanger lesdites données avec ledit calculateur central selon un protocole unique.

11. Architecture selon l'une quelconque des revendications précédentes, **caractérisée en ce qu'**il comporte au moins une passerelle (35) apte à connecter ledit réseau de communication (34, 36) à au moins un autre réseau de communication.

12. Architecture selon la revendication 11, **caractérisée en ce qu'**elle comporte un calculateur secondaire (32) communiquant avec ledit réseau de communication (34, 36) au moyen de ladite passerelle (35), ledit calculateur secondaire (32) pilotant des fonctions connectées audit autre réseau.

13. Architecture selon l'une quelconque des revendications 3 à 12, **caractérisée en ce qu'**elle comporte une combinaison de techniques en complément de l'exécution de plusieurs partitions logicielles, ladite combinaison formant des domaines virtuels (81, 82, 83, 84, 85, 91, 92, 93, 94), chaque domaine virtuel couvrant au moins une desdites partition traitant les modules d'interface (33) d'un groupe de capteurs et d'actionneurs.

14. Architecture selon la revendication 13, **caractérisée en ce que** ladite combinaison comporte une combinaison de mécanismes de ségrégation de transfert de données dans ledit réseau de communications temps réel (34, 36).

15. Architecture selon l'une quelconque des revendications 13 ou 14, **caractérisée en ce que** ladite combinaison est basée sur des attributs de données placés par lesdits modules d'interface (33).

16. Architecture selon l'une quelconque des revendications 13 à 15, **caractérisé en ce que** les communications entre ledit calculateur central (31) et lesdits modules d'interface (33) sont commandées par ledit calculateur (31).

17. Architecture selon l'une quelconque des revendications 3 à 14, **caractérisée en ce qu'**elle comporte un sous-système (101) pour la gestion des signaux d'entrée et de sortie à haute vitesse de transmission, connecté à l'infrastructure d'interconnexion (55) de ladite carte mère, ledit sous-système étant composé d'une ou plusieurs cartes filles et assurant la fonction d'un module d'interface (33) entre des capteurs et/ou actionneurs à haut vitesse de transmission et ledit calculateur central (31).

18. Architecture selon l'une quelconque des revendications précédentes, **caractérisée en ce que** ledit réseau de communication est du type Ethernet déterministe.

## Patentansprüche

1. Elektronische Architektur, die in einem System mitgeführt wird, das die Verwaltung der Funktionen des Systems gewährleistet, wobei die Funktionen über einen Satz von Sensoren und Betätigungselementen implementiert werden, **dadurch gekennzeichnet, dass** sie mindestens Folgendes umfasst:
- einen zentralen Rechner (31);
- ein Echtzeit-Kommunikationsnetzwerk (34, 36);
- einen Satz von Schnittstellenmodulen (33), die jeweils einem geographischen Gebiet des Systems zugewiesen sind, wobei jedes Modul:
o Signale von mindestens einem der Sensoren des ihm zugewiesenen Gebiets aggregiert und diese Signale über das Kommunikationsnetzwerk an den zentralen Rechner sendet;
o und/oder Steuersignale an mindestens eines der Betätigungselemente des ihm zugewiesenen Gebiets verteilt;
wobei der zentrale Rechner die Betätigungselemente entsprechend den von den Sensoren stammenden Signalen steuert, wobei die Steuersignale der Betätigungselemente über das Kommunikationsnetzwerk an die Schnittstellenmodule (33) gesendet werden, wobei mindestens eines der Schnittstellenmodule (33) die von Sensoren mehrerer Funktionsbereiche ausgegebenen Signale aggregiert und Befehle an Betätigungselemente mehrerer Funktionsbereiche verteilt, wobei sich die Sensoren und Betätigungselemente in dem geografischen Gebiet befinden, das dem mindestens einen Modul (33) zugewiesen ist.

2. Architektur nach Anspruch 1, **dadurch gekennzeichnet, dass** mindestens eines der Schnittstellenmodule auch Signale von mindestens einem der Betätigungselemente aggregiert und/oder Signale an mindestens einen der Sensoren verteilt.

3. Architektur nach einem der vorhergehenden Ansprüche, **dadurch gekennzeichnet, dass** der zentrale Rechner (31, 32) aus einer Hauptplatine (50) und Rechensubsystemen (51, 52, 53, 54, 55) besteht, wobei jedes Subsystem einen oder mehrere Prozessoren (511, 521, 531, 541) umfasst, die mit einem privaten Speicher (512, 522, 532, 542) gekoppelt sind und in der Lage sind, mehrere Software-Partitionen (513, 523, 533, 534) auszuführen, wobei die Subsysteme untereinander und mit dem Kommunikationsnetzwerk (34, 36) mittels einer auf der Hauptplatine implementierten Verbindungsinfrastruktur (55) kommunizieren.

4. Architektur nach Anspruch 3, **dadurch gekennzeichnet, dass** sie einen zentralisierten Datenverwaltungsfunktionsblock (502) umfasst, der es ermöglicht, auf die Daten der im Rechner (31, 32) und in den Modulen (33) vorhandenen Speicher zuzugreifen, wobei der Funktionsblock (502) den verschiedenen Komponenten der Architektur einen einheitlichen Zugriff auf die mit den im System verteilten Sensoren und Betätigungselementen verbundenen Daten sowie auf die von den Rechensubsystemen erzeugten Daten gewährleistet.

5. Architektur nach Anspruch 4, **dadurch gekennzeichnet, dass** der Funktionsblock (502) mittels eines verteilten Speicherdiensts realisiert wird, der virtuell zwischen dem Rechner (31, 32) und den Modulen (33) geteilt wird, sodass die gesamte Kommunikation des zentralen Rechners (31, 32) mit den Sensoren und Betätigungselementen über den virtuellen Speicher erfolgt und sodass die in der Architektur verteilten Speicher und alle Sensoren und Betätigungselemente sich dem zentralen Rechner wie ein einziger gemeinsam genutzter Speicher darstellen.

6. Architektur nach Anspruch 5, **dadurch gekennzeichnet, dass** der Funktionsblock (502) den Zugriff auf die Daten durch die Verwendung von mit den Daten verknüpften Attributen ermöglicht.

7. Architektur nach einem der Ansprüche 3 bis 6, **dadurch gekennzeichnet, dass** sie einen Funktionsblock (501) zum Gewährleisten der Synchronisation zwischen den Rechensubsystemen umfasst.

8. Architektur nach einem der Ansprüche 3 bis 7, **dadurch gekennzeichnet, dass** sie einen Funktionsblock (503) zum Gewährleisten und Unterstützen der mit der Betriebssicherheit des Systems verbundenen Dienste umfasst.

9. Architektur nach einem der vorhergehenden Ansprüche, **dadurch gekennzeichnet, dass** ein Schnittstellenmodul (33) mindestens Folgendes umfasst:
- einen Kommunikationsprozessor (72);
- Kommunikationsschnittstellen (71) zwischen dem Prozessor (72) und Betätigungselementen und/oder Sensoren;
- eine Kommunikationsschnittstelle (74) zwischen dem Prozessor und dem Kommunikationsnetzwerk (34, 36);
wobei der Kommunikationsprozessor die Funktion aufweist, die von den Sensoren stammenden Daten in Paketen anzuordnen, um sie über das Kommunikationsnetzwerk an den zentralen Rechner (31, 32) zu übertragen, und die von dem zentralen Rechner stammenden Steuerdaten über das Kommunikationsnetzwerk an die Betätigungselemente zu verteilen.

10. Architektur nach Anspruch 9, **dadurch gekennzeichnet, dass** die Kommunikationsschnittstellen (71) zwischen dem Prozessor und den Betätigungselementen und/oder Sensoren unterschiedlicher Art sind, wobei der Prozessor (72) Übersetzungen von Kommunikationsprotokollen der Schnittstellen durchführt, um die Daten mit dem zentralen Rechner gemäß einem einzigen Protokoll auszutauschen.

11. Architektur nach einem der vorhergehenden Ansprüche, **dadurch gekennzeichnet, dass** sie mindestens ein Gateway (35) umfasst, das in der Lage ist, das Kommunikationsnetzwerk (34, 36) mit mindestens einem anderen Kommunikationsnetzwerk zu verbinden.

12. Architektur nach Anspruch 11, **dadurch gekennzeichnet, dass** sie einen sekundären Rechner (32) umfasst, der mit dem Kommunikationsnetzwerk (34, 36) mittels des Gateways (35) kommuniziert, wobei der sekundäre Rechner (32) mit dem anderen Netzwerk verbundene Funktionen steuert.

13. Architektur nach einem der Ansprüche 3 bis 12, **dadurch gekennzeichnet, dass** sie eine Kombination von Techniken in Ergänzung der Ausführung mehrerer Software-Partitionen umfasst, wobei die Kombination virtuelle Domänen (81, 82, 83, 84, 85, 91, 92, 93, 94) bildet, wobei jede virtuelle Domäne mindestens eine der Partitionen abdeckt, welche die Schnittstellenmodule (33) einer Gruppe von Sensoren und Betätigungselementen verarbeitet.

14. Architektur nach Anspruch 13, **dadurch gekennzeichnet, dass** die Kombination eine Kombination von Mechanismen zur Segregation der Datenübertragung in dem Echtzeit-Kommunikationsnetzwerk (34, 36) umfasst.

15. Architektur nach einem der Ansprüche 13 oder 14, **dadurch gekennzeichnet, dass** die Kombination auf Datenattributen basiert, die von den Schnittstellenmodulen (33) platziert werden.

16. Architektur nach einem der Ansprüche 13 bis 15, **dadurch gekennzeichnet, dass** die Kommunikationen zwischen dem zentralen Rechner (31) und den Schnittstellenmodulen (33) von dem Rechner (31) gesteuert werden.

17. Architektur nach einem der Ansprüche 3 bis 14, **dadurch gekennzeichnet, dass** sie ein Subsystem (101) zur Verwaltung der Eingangs- und Ausgangssignale mit hoher Übertragungsgeschwindigkeit umfasst, das mit der Verbindungsinfrastruktur (55) der Hauptplatine verbunden ist, wobei das Subsystem aus einer oder mehreren Tochterkarten besteht und die Funktion eines Schnittstellenmoduls (33) zwischen Sensoren und/oder Betätigungselementen mit hoher Übertragungsgeschwindigkeit und dem zentralen Rechner (31) gewährleistet.

18. Architektur nach einem der vorhergehenden Ansprüche, **dadurch gekennzeichnet, dass** das Kommunikationsnetzwerk ein Netzwerk vom deterministischen Ethernet-Typ ist.

## Claims

1. An electronic architecture embedded in a system carrying out the management of the functions of said system, said functions being implemented via a set of sensors and actuators, **characterised in that** it comprises at least:
- a central computer (31);
- a real-time communication network (34, 36);
- a set of interface modules (33) each assigned to a geographical area of said system, each module:
∘ aggregating signals from at least one of said sensors of the area assigned thereto and sending said signals to said central computer via said communication network;
∘ and/or distributing control signals to at least one of said actuators of the area assigned thereto;
said central computer driving said actuators according to the signals from said sensors, the control signals for said actuators being sent to said interface modules (33) via said communication network, at least one of said interface modules (33) aggregating the signals from sensors of several functional domains and distributes commands to actuators of several functional domains, said sensors and actuators being located in the geographical area assigned to said at least one module (33).

2. The architecture according to claim 1, **characterised in that** at least one of said interface modules also aggregates signals from at least one of said actuators and/or distributes signals to at least one of said sensors.

3. The architecture according to any one of the preceding claims, **characterised in that** said central computer (31, 32) is composed of a motherboard (50) and of computing subsystems (51, 52, 53, 54, 55), each subsystem comprising one or more processors (511, 521, 531, 541) which are coupled to a private memory (512, 522, 532, 542) and are capable of executing several software partitions (513, 523, 533, 534), said subsystems communicating with one another and with said communication network (34, 36) by means of an interconnection infrastructure (55) implemented on said motherboard.

4. The architecture according to claim 3, **characterised in that** it comprises a centralised functional block for managing data (502) allowing access to the data of the memories present in the computer (31, 32) and in said modules (33), said functional block (502) providing the various components of said architecture with unified access to the data related to the sensors and actuators distributed in said system as well as to the data generated by said computing subsystems.

5. The architecture according to claim 4, **characterised in that** said functional block (502) is implemented by means of a distributed memory service virtually shared between said computer (31, 32) and said modules (33), such that all communications of said central computer (31, 32) with said sensors and actuators pass through said virtual memory and such that the memories distributed in said architecture and all of the sensors and actuators appear to said central computer as a single shared memory.

6. The architecture according to claim 5, **characterised in that** said functional block (502) makes it possible to secure the access to the data via the use of attributes associated with the data.

7. The architecture according to any one of claims 3 to 6, **characterised in that** it comprises a functional block (501) for ensuring synchronisation between said computing subsystems.

8. The architecture according to any one of claims 3 to 7, **characterised in that** it comprises a functional block (503) that provides and supports the services linked to the operational dependability of said system.

9. The architecture according to any one of the preceding claims, **characterised in that** an interface module (33) comprises at least:
- a communication processor (72);
- communication interfaces (71) between said processor (72) and actuators and/or sensors;
- a communication interface (74) between said processor and said communication network (34, 36);
the function of said communication processor being to arrange the data from said sensors into packets to transmit them to said central computer (31, 32) via said communication network and to distribute the command data from said central computer, via said communication network, to said actuators.

10. The architecture according to claim 9, **characterised in that** said communication interfaces (71) between said processor and said actuators and/or sensors being of different types, said processor (72) translates communication protocols of said interfaces to exchange said data with said central computer according to a single protocol.

11. The architecture according to any one of the preceding claims, **characterised in that** it comprises at least one gateway (35) able to connect said communication network (34, 36) to at least one other communication network.

12. The architecture according to claim 11, **characterised in that** it comprises a secondary computer (32) communicating with said communication network (34, 36) by means of said gateway (35), said secondary computer (32) driving functions which are connected to said other network.

13. The architecture according to any one of claims 3 to 12, **characterised in that** it comprises a combination of techniques in addition to the execution of several software partitions, said combination forming virtual domains (81, 82, 83, 84, 85, 91, 92, 93, 94), each virtual domain covering at least one of said partitions processing the interface modules (33) of a group of sensors and actuators.

14. The architecture according to claim 13, **characterised in that** said combination comprises a combination of data transfer segregation mechanisms in said real-time communication network (34, 36).

15. The architecture according to any one of claims 13 or 14, **characterised in that** said combination is based on data attributes placed by said interface modules (33).

16. The architecture according to any one of claims 13 to 15, **characterised in that** the communications between said central computer (31) and said interface modules (33) are controlled by said computer (31).

17. The architecture according to any one of claims 3 to 14, **characterised in that** it comprises a subsystem (101) for managing the input and output signals with high transmission speeds, which is connected to the interconnection infrastructure (55) of said motherboard, said subsystem being composed of one or more daughterboards and performing the function of an interface module (33) between sensors and/or actuators with high transmission speeds and said central computer (31).

18. The architecture according to any one of the preceding claims, **characterised in that** said communication network is of deterministic Ethernet type.
